# EUROPEAN PATENT APPLICATION

(11) **EP 3 355 169 A1**
(43) Date of publication of application: **01.08.2018**
(21) Application number: 16848730.4
(22) Date of filing: 12.02.2016
(51) Int. Cl.: G06F 3/0354, G06F 3/0488, H04M 1/725, G06F 3/0346, G06K 9/00

(54) **MOBILE TERMINAL AND CONTROL METHOD THEREFOR**

(30) Priority: 25.09.2015 KR 20150136354
(71) Applicant: LG Electronics Inc., Yeongdeungpo-gu Seoul 07336 (KR)
(72) Inventor: CHO, Hyomoon, Seoul 06772 (KR); GIM, Younggi, Seoul 06772 (KR); LIM, Hakyoon, Seoul 06772 (KR); YI, Hyunju, Seoul 06772 (KR)
(74) Representative: Beyer, Andreas
(86) International application number: PCT/KR2016/001449
(87) International publication number: WO 2017/052004

(57) **Abstract**

A mobile terminal and a method for controlling the same are disclosed. A pen type input device includes a wireless communication unit, an image recognition unit configured to obtain a pattern image displayed on a writing surface and recognize encryption information included in the pattern image, an operational sensor configured to sense a movement, and a controller configured to generate input information based on the movement sensed by the operational sensor, encrypt the input information based on the encryption information, and transmit the encrypted input information to an external device through the wireless communication unit.

## Description

### [Technical Field]

The present disclosure relates to a mobile terminal and a method for controlling the same, and more particularly to a pen type input device, a mobile terminal having an input function using the pen type input device, and a method for controlling the same.

### [Background Art]

Terminals may be generally classified as mobile/portable terminals or stationary terminals according to their mobility. Mobile terminals may also be classified as handheld terminals or vehicle mounted terminals depending on whether or not a user can directly carry the terminal.

Mobile terminals have become increasingly more functional. Examples of such functions include data and voice communications, capturing images and video via a camera, recording audio, playing music files via a speaker system, and displaying images and video on a display. Some mobile terminals include additional functionality which supports game playing, while other terminals are configured as multimedia players. More recently, mobile terminals have been configured to receive broadcast and multicast signals which permit viewing of content such as videos and television programs.

Efforts are ongoing to support and increase the functionality of mobile terminals. Such efforts include software and hardware improvements, as well as changes and improvements in the structural components.

Recently, the mobile terminal is generally provided with a touch screen. Hence, the number of users using a pen type input device, such as a touch pen and a stylus pen, for an input of the touch screen has been consistently increasing.

As a result, a study to increase the convenience of the users using the pen type input device has been actively carried out.

### [Disclosure]

### [Technical Problem]

Accordingly, an object of the present disclosure is to address the above-noted and other problems.

Another aspect of the present disclosure is to provide a mobile terminal and a pen type input device capable of improving convenience of a user.

Another aspect of the present disclosure is to provide a mobile terminal and a pen type input device capable of improving a security level when information is input using the pen type input device.

### [Technical Solution]

In one aspect, there is provided a pen type input device comprising a wireless communication unit, an image recognition unit configured to obtain a pattern image displayed on a writing surface and recognize encryption information included in the pattern image, an operational sensor configured to sense a movement, and a controller configured to generate input information based on the movement sensed by the operational sensor, encrypt the input information in accordance with the encryption information, and transmit the encrypted input information to an external device through the wireless communication unit.

In another aspect, there is provided a mobile terminal comprising a touch screen, and a controller configured to produce a pattern image including encryption information for encrypting input information generated in a pen type input device when a writing screen for the pen type input device is displayed on the touch screen, and display the pattern image on the writing screen.

### [Advantageous Effects]

The mobile terminal and the method for controlling the same according to the present invention have the following advantages.

According to at least one embodiment of the present invention, it is possible to provide security information for encrypting information input to the pen type input device through the touch screen of the mobile terminal.

According to at least one embodiment of the present invention, it is possible to improve the degree of recognition of the writing input by providing the coordinate information for recognizing the writing input to the pen type input device through the touch screen of the mobile terminal.

According to at least one embodiment of the present invention, it is possible to enhance the security of the user input information by encrypting the information input through the pen type input device and transmitting the encrypted information to the mobile terminal or the target server.

### [Description of Drawings]

FIG. 1a is a block diagram of a mobile terminal according to an embodiment;
FIG. 1b and 1c are a front perspective view and a rear perspective view of the mobile terminal according to an embodiment;
FIG. 2 is a block diagram of a pen type input device according to an embodiment;
FIG. 3 illustrates a use state of a mobile terminal and a pen type input device according to an embodiment;
FIGS. 4 to 9 illustrate a method for controlling a mobile terminal and a pen type input device according to a first embodiment of the invention;
FIGS. 10 to 13 illustrate a method for controlling a mobile terminal and a pen type input device according to a second embodiment of the invention; and
FIGS. 14 to 22 illustrate a method for controlling a mobile terminal and a pen type input device according to a third embodiment of the invention.

### [Mode for Invention]

Arrangements and embodiments may now be described more fully with reference to the accompanying drawings, in which exemplary embodiments may be shown. Embodiments may, however, be embodied in many different forms and should not be construed as being limited to embodiments set forth herein; rather, embodiments may be provided so that this disclosure will be thorough and complete, and will fully convey the concept to those skilled in the art.

A mobile terminal may be described below with reference to the accompanying drawings. In the following description, suffixes "module" and "unit" may be given to components of the mobile terminal in consideration of only facilitation of description and do not have meanings or functions discriminated from each other.

The mobile terminal may include a cellular phone, a smart phone, a laptop computer, a digital broadcasting terminal, personal digital assistants (PDA), a portable multimedia player (PMP), a navigation system and/or so on.

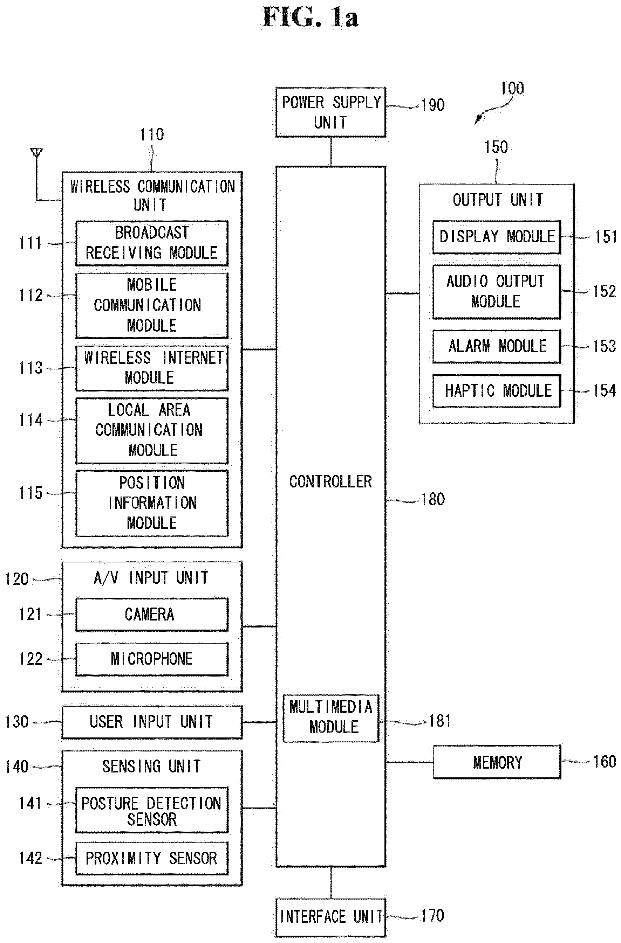

FIG. 1a is a block diagram of a mobile terminal according to an embodiment. Other embodiments, configurations and arrangements may also be provided.

As shown, the mobile terminal 100 may include a wireless communication unit 110 (or radio communication unit), an audio/video (A/V) input unit 120, a user input unit 130, a sensing unit 140, an output unit 150, a memory 160, an interface 170, a controller 180, and a power supply unit 190. The components shown in FIG. 1a may be essential parts and/or a number of components included in the mobile terminal 100 may vary. Components of the mobile terminal 100 may now be described.

The wireless communication unit 110 may include at least one module that enables wireless communication between the mobile terminal 100 and a radio communication system or between the mobile terminal 100 and a network in which the mobile terminal 100 is located. For example, the wireless communication unit 110 may include a broadcasting receiving module 111, a mobile communication module 112, a wireless Internet module 113, a short range communication module 114 (or local area communication module), and a location information module 115 (or position information module).

The broadcasting receiving module 111 may receive broadcasting signals and/or broadcasting related information from an external broadcasting management server through a broadcasting channel. The broadcasting channel may include a satellite channel and a terrestrial channel, and the broadcasting management server may be a server that generates and transmits broadcasting signals and/or broadcasting related information or a server that receives previously created broadcasting signals and/or broadcasting related information and transmits the broadcasting signals and/or broadcasting related information to a terminal.

The broadcasting signals may include not only TV broadcasting signals, radio broadcasting signals, and data broadcasting signals but also signals in the form of a combination of a TV broadcasting signal and a radio broadcasting signal. The broadcasting related information may be information on a broadcasting channel, a broadcasting program or a broadcasting service provider, and may be provided even through a mobile communication network. In the latter case, the broadcasting related information may be received by the mobile communication module 112.

The broadcasting related information may exist in various forms. For example, the broadcasting related information may exist in the form of an electronic program guide (EPG) of a digital multimedia broadcasting (DMB) system or in the form of an electronic service guide (ESG) of a digital video broadcast-handheld (DVB-H) system.

The broadcasting receiving module 111 may receive broadcasting signals using various broadcasting systems. More particularly, the broadcasting receiving module 111 may receive digital broadcasting signals using digital broadcasting systems such as a digital multimedia broadcasting-terrestrial (DMB-T) system, a digital multimedia broadcasting-satellite (DMB-S) system, a media forward link only (MediaFLO) system, a DVB-H and integrated services digital broadcast-terrestrial (ISDB-T) systems. The broadcasting receiving module 111 may receive signals from broadcasting systems providing broadcasting signals other than the above-described digital broadcasting systems.

The broadcasting signals and/or broadcasting related information received through the broadcasting receiving module 111 may be stored in the memory 160. The mobile communication module 112 may transmit/receive a radio signal to/from at least one of a base station, an external terminal and a server on a mobile communication network. The radio signal may include a voice call signal, a video telephony call signal or data in various forms according to transmission and reception of text/multimedia messages.

The wireless Internet module 113 may correspond to a module for wireless Internet access and may be included in the mobile terminal 100 or may be externally attached to the mobile terminal 100. Wireless LAN (WLAN or Wi-Fi), wireless broadband (Wibro), world interoperability for microwave access (Wimax), high speed downlink packet access (HSDPA) and so on may be used as a wireless Internet technique.

The short range communication module 114 may correspond to a module for short range communication. Further, Bluetooth®, radio frequency identification (RFID), infrared data association (IrDA), ultra wideband (UWB) and/or ZigBee® may be used as a short range communication technique.

The location information module 115 may confirm or obtain a location or a position of the mobile terminal 100. The location information module 115 may obtain position information by using a global navigation satellite system (GNSS). The GNSS is a terminology describing a radio navigation satellite system that revolves around the earth and transmits reference signals to predetermined types of radio navigation receivers such that the radio navigation receivers can determine their positions on the earth's surface or near the earth's surface. The GNSS may include a global positioning system (GPS) of the United States, Galileo of Europe, a global orbiting navigational satellite system (GLONASS) of Russia, COMPASS of China, and a quasi-zenith satellite system (QZSS) of Japan, for example.

A global positioning system (GPS) module is a representative example of the location information module 115. The GPS module may calculate information on distances between one point or object and at least three satellites and information on a time when distance information is measured and apply trigonometry to the obtained distance information to obtain three-dimensional position information on the point or object according to latitude, longitude and altitude at a predetermined time.

A method of calculating position and time information using three satellites and correcting the calculated position and time information using another satellite may also be used. Additionally, the GPS module may continuously calculate a current position in real time and calculate velocity information using the location or position information.

The A/V input unit 120 may input (or receive) an audio signal and/or a video signal. The A/V input unit 120 may include a camera 121 and a microphone 122. The camera 121 may process image frames of still images or moving images obtained by an image sensor in a video telephony mode or a photographing mode. The processed image frames may be displayed on a display module 151, which may be a touch screen.

The image frames processed by the camera 121 may be stored in the memory 160 or may be transmitted to an external device through the wireless communication unit 110. The mobile terminal 100 may also include at least two cameras 121.

The microphone 122 may receive an external audio signal in a call mode, a recording mode and/or a speech recognition mode, and the microphone 122 may process the received audio signal into electric audio data. The audio data may then be converted into a form that can be transmitted to a mobile communication base station through the mobile communication module 112 and output in the call mode. The microphone 122 may employ various noise removal algorithms (or noise canceling algorithm) for removing or reducing noise generated when the external audio signal is received.

The user input unit 130 may receive input data for controlling operation of the mobile terminal 100 from a user. The user input unit 130 may include a keypad, a dome switch, a touch pad (constant voltage/capacitance), a jog wheel, a jog switch and/or so on.

The sensing unit 140 may sense a current state of the mobile terminal 100, such as an open/close state of the mobile terminal 100, a position of the mobile terminal 100, whether a user touches the mobile terminal 100, a direction of the mobile terminal 100, and acceleration/deceleration of the mobile terminal 100, and the sensing unit 140 may generate a sensing signal for controlling operation of the mobile terminal 100. For example, in an example of a slide phone, the sensing unit 140 may sense whether the slide phone is opened or closed. Further, the sensing unit 140 may sense whether the power supply unit 190 supplies power and/or whether the interface 170 is connected to an external device. The sensing unit 140 may also include a proximity sensor. The sensing unit 140 may sense a motion of the mobile terminal 100.

The output unit 150 may generate visual, auditory and/or tactile output, and the output unit 150 may include the display module 151, an audio output module 152, an alarm 153 and a haptic module 154. The display module 151 may display information processed by the mobile terminal 100. The display module 151 may display a user interface (UI) and/or a graphic user interface (GUI) related to a telephone call when the mobile terminal 100 is in the call mode. The display module 151 may also display a captured and/or received image, a UI or a GUI when the mobile terminal 100 is in the video telephony mode or the photographing mode.

The display module 151 may include at least one of a liquid crystal display, a thin film transistor liquid crystal display, an organic light-emitting diode display, a flexible display and/or a three-dimensional display. The display module 151 may be of a transparent type or a light transmissive type. That is, the display module 151 may include a transparent display.

The transparent display may be a transparent liquid crystal display. A rear structure of the display module 151 may also be of a light transmissive type. Accordingly, a user may see an object located behind the body (of the mobile terminal 100) through the transparent area of the body of the mobile terminal 100 that is occupied by the display module 151.

The mobile terminal 100 may also include at least two displays 151. For example, the mobile terminal 100 may include a plurality of displays 151 that are arranged on a single face at a predetermined distance or integrated displays. The plurality of displays 151 may also be arranged on different sides.

When the display module 151 and a sensor sensing touch (hereafter referred to as a touch sensor) form a layered structure that is referred to as a touch screen, the display module 151 may be used as an input device in addition to an output device. The touch sensor may be in the form of a touch film, a touch sheet, and/or a touch pad, for example.

The touch sensor may convert a variation in pressure applied to a specific portion of the display module 151 or a variation in capacitance generated at a specific portion of the display module 151 into an electric input signal. The touch sensor may sense pressure of touch as well as position and area of the touch.

When the user applies a touch input to the touch sensor, a signal corresponding to the touch input may be transmitted to a touch controller. The touch controller may then process the signal and transmit data corresponding to the processed signal to the controller 180. Accordingly, the controller 180 may detect a touched portion of the display module 151.

The proximity sensor (of the sensing unit 140) may be located in an internal region of the mobile terminal 100, surrounded by the touch screen, and/or near the touch screen. The proximity sensor may sense an object approaching a predetermined sensing face or an object located near the proximity sensor using an electromagnetic force or infrared rays without having mechanical contact. The proximity sensor may have a lifetime longer than a contact sensor and may thus have a wide application in the mobile terminal 100.

The proximity sensor may include a transmission type photo-electric sensor, a direct reflection type photo-electric sensor, a mirror reflection type photo-electric sensor, a high-frequency oscillating proximity sensor, a capacitive proximity sensor, a magnetic proximity sensor, and/or an infrared proximity sensor. A capacitive touch screen may be constructed such that proximity of a pointer is detected through a variation in an electric field according to the proximity of the pointer. The touch screen (touch sensor) may be classified as a proximity sensor.

For ease of explanation, an action of the pointer approaching the touch screen without actually touching the touch screen may be referred to as a proximity touch and an action of bringing the pointer into contact with the touch screen may be referred to as a contact touch. The proximity touch point of the pointer on the touch screen may correspond to a point of the touch screen at which the pointer is perpendicular to the touch screen.

The proximity sensor may sense the proximity touch and a proximity touch pattern (e.g., a proximity touch distance, a proximity touch direction, a proximity touch velocity, a proximity touch time, a proximity touch position, a proximity touch moving state, etc.). Information corresponding to the sensed proximity touch action and proximity touch pattern may then be displayed on the touch screen.

The audio output module 152 may output audio data received from the wireless communication unit 110 or stored in the memory 160 in a call signal receiving mode, a telephone call mode or a recording mode, a speech recognition mode and a broadcasting receiving mode. The audio output module 152 may output audio signals related to functions, such as a call signal incoming tone and a message incoming tone, performed in the mobile terminal 100. The audio output module 152 may include a receiver, a speaker, a buzzer, and/or the like. The audio output module 152 may output sounds through an earphone jack. The user may hear the sounds by connecting an earphone to the earphone jack.

The alarm 153 may output a signal for indicating generation of an event of the mobile terminal 100. For example, an alarm may be generated when receiving a call signal, receiving a message, inputting a key signal, and/or inputting a touch. The alarm 153 may also output signals in forms different from video signals or audio signals, for example, a signal for indicating generation of an event through vibration. The video signals and/or the audio signals may also be output through the display module 151 or the audio output module 152.

The haptic module 154 may generate various haptic effects that the user can feel. One example of the haptic effects is vibration. An intensity and/or pattern of vibration generated by the haptic module 154 may also be controlled. For example, different vibrations may be combined and output or may be sequentially output.

The haptic module 154 may generate a variety of haptic effects including an effect of stimulus according to an arrangement of pins vertically moving against a contact skin surface, an effect of stimulus according to a jet force or sucking force of air through a jet hole or a sucking hole, an effect of stimulus of rubbing the skin, an effect of stimulus according to contact of an electrode, an effect of stimulus using an electrostatic force, and an effect according to a reproduction of cold and warmth using an element capable of absorbing or radiating heat in addition to vibrations.

The haptic module 154 may not only transmit haptic effects through direct contact but may also allow the user to feel haptic effects through a kinesthetic sense of the user's fingers or arms. The mobile terminal 100 may also include a plurality of haptic modules 154.

The memory 160 may store a program for operations of the controller 180 and/or temporarily store input/output data such as a phone book, messages, still images, and/or moving images. The memory 160 may also store data about vibrations and sounds in various patterns that are output from when a touch input is applied to the touch screen.

The memory 160 may include at least a flash memory, a hard disk type memory, a multimedia card micro type memory, a card type memory, such as SD or XD memory, a random access memory (RAM), a static RAM (SRAM), a read-only memory (ROM), an electrically erasable programmable ROM (EEPROM), a programmable ROM (PROM) magnetic memory, a magnetic disk and/or an optical disk. The mobile terminal 100 may also operate in relation to a web storage that performs a storing function of the memory 160 on the Internet.

The interface 170 may serve as a path to external devices connected to the mobile terminal 100. The interface 170 may receive data from the external devices or power and transmit the data or power to internal components of the mobile terminal 100 or transmit data of the mobile terminal 100 to the external devices. For example, the interface 170 may include a wired/wireless headset port, an external charger port, a wired/wireless data port, a memory card port, a port for connecting a device having a user identification module, an audio I/O port, a video I/O port, and/or an earphone port.

The interface 170 may also interface with a user identification module that is a chip that stores information for authenticating authority to use the mobile terminal 100. For example, the user identification module may be a user identify module (UIM), a subscriber identify module (SIM) and/or a universal subscriber identify module (USIM). An identification device (including the user identification module) may also be manufactured in the form of a smart card. Accordingly, the identification device may be connected to the mobile terminal 100 through a port of the interface 170.

The interface 170 may also be a path through which power from an external cradle is provided to the mobile terminal 100 when the mobile terminal 100 is connected to the external cradle or a path through which various command signals input by the user through the cradle are transmitted to the mobile terminal 100. The various command signals or power input from the cradle may be used as signals for confirming whether the mobile terminal 100 is correctly set in the cradle.

The controller 180 may control overall operations of the mobile terminal 100. For example, the controller 180 may perform control and processing for voice communication, data communication and/or video telephony. The controller 180 may also include a multimedia module 181 for playing multimedia. The multimedia module 181 may be included in the controller 180 or may be separated from the controller 180.

The controller 180 may perform a pattern recognition process capable of recognizing handwriting input or picture-drawing input applied to the touch screen as characters or images. The power supply unit 190 may receive external power and internal power and provide power required for operations of the components of the mobile terminal 100 under control of the controller 180.

According to hardware implementation, embodiments may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and/or electrical units for executing functions. Embodiments may be implemented by the controller 180.

According to software implementation, embodiments such as procedures or functions may be implemented with a separate software module that executes at least one function or operation. Software codes may be implemented according to a software application written in an appropriate software language. The software codes may be stored in the memory 160 and executed by the controller 180.

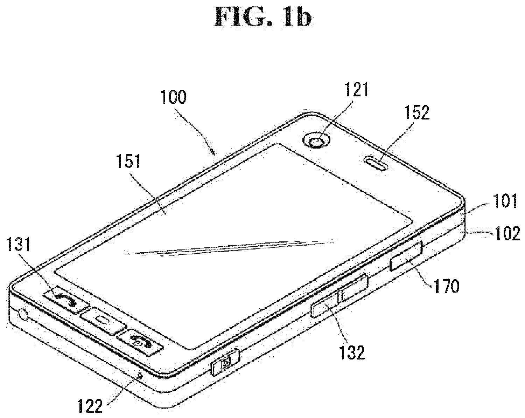

FIG. 1b is a front perspective view of a mobile terminal (or a handheld terminal) according to an embodiment.

The mobile terminal 100 may be a bar type terminal body. However, embodiments are not limited to a bar type terminal and may be applied to terminals of various types including slide type, folder type, swing type and/or swivel type terminals having at least two bodies that are relatively movably combined.

The terminal body may include a case (a casing, a housing, a cover, etc.) that forms an exterior of the mobile terminal 100. In this embodiment, the case may be divided into a front case 101 and a rear case 102. Various electronic components may be arranged in the space formed between the front case 101 and the rear case 102. At least one middle case may be additionally provided between the front case 101 and the rear case 102.

The cases may be formed of plastics through injection molding or made of a metal material such as stainless steel (STS) or titanium (Ti).

The display module 151, the audio output unit 152, the camera 121, the user input unit 130/131 and 132, the microphone 122 and the interface 170 may be arranged (or provided) in the terminal body, and more specifically may be arranged (or provided) in the front case 101.

The display module 151 may occupy most of the main face of the front case 101. The audio output unit 152 and the camera 121 may be arranged in a region in proximity to one of both ends of the display module 151 and the user input unit 131, and the microphone 122 may be located in a region in proximity to another end of the display module 151. The user input unit 132 and the interface 170 may be arranged (or provided) on sides of the front case 101 and the rear case 102.

The user input unit 130 may receive commands for controlling operation of the mobile terminal 100, and may include a plurality of operating units 131 and 132. The operating units 131 and 132 may be referred to as manipulating portions and may employ any tactile manner in which a user operates the operating units 131 and 132 while having tactile feeling.

The first and second operating units 131 and 132 may receive various inputs. For example, the first operating unit 131 may receive commands such as start, end and scroll and the second operating unit 132 may receive commands such as control of a volume of sound output from the audio output unit 152 or conversion of the display module 151 to a touch recognition mode.

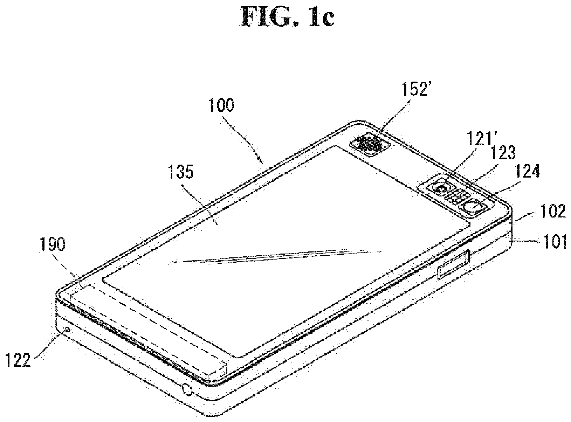

FIG. 1c is a rear perspective view of the mobile terminal (shown in FIG. 1b) according to an embodiment.

Referring to FIG. 1b, a camera 121' may be additionally attached to the rear side of the terminal body (i.e., the rear case 102). The camera 121' may have a photographing direction opposite to that of the camera 121 (shown in FIG. 1b) and may have pixels different from those of the camera 121 (shown in FIG. 1b).

For example, it may be desirable that the camera 121 has low pixels such that the camera 121 may capture an image of a face of a user and transmit the image to a receiving part in case of video telephony while the camera 121' has high pixels because the camera 121' captures an image of a general object and does not immediately transmit the image in many cases. The cameras 121 and 121' may be attached (or provided) to the terminal body such that the cameras 121 and 121' may rotate or pop-up.

A flash bulb 123 and a mirror 124 may be additionally provided in proximity to the camera 121'. The flash bulb 123 may light an object when the camera 121' takes a picture of the object. The mirror 124 may be used for the user to look at his/her face in the mirror when the user wants to self-photograph himself/herself using the camera 121'.

An audio output unit 152' may be additionally provided on the rear side of the terminal body. The audio output unit 152' may achieve a stereo function with the audio output unit 152 (shown in FIG. 1b) and may be used for a speaker phone mode when the terminal is used for a telephone call.

A broadcasting signal receiving antenna may be additionally attached (or provided) to the side of the terminal body in addition to an antenna for telephone calls. The antenna constructing a part of the broadcasting receiving module 111 (shown in FIG. 1a) may be set in the terminal body such that the antenna may be pulled out of the terminal body.

The power supply unit 190 for providing power to the mobile terminal 100 may be set in the terminal body. The power supply unit 190 may be included in the terminal body or may be detachably attached to the terminal body.

A touch pad 135 for sensing touch may be attached to the rear case 102. The touch pad 135 may be of a light transmission type, such as the display module 151. In this example, if the display module 151 outputs visual information through both sides thereof, the visual information may be recognized (or determined) by the touch pad 135. The information output through both sides of the display module 151 may be controlled by the touch pad 135. Otherwise, a display may be additionally attached (or provided) to the touch pad 135 such that a touch screen may be arranged (or provided) even in the rear case 102.

The touch pad 135 may operate in connection with the display module 151 of the front case 101. The touch pad 135 may be located in parallel with the display module 151 behind the display module 151. The touch panel 135 may be identical to or smaller than the display module 151 in size.

Hereinafter, embodiments related to a control method capable of being implemented in an electronic device including the mobile terminal thus configured and a pen type input device are described with reference to the accompanying drawings. The embodiments may be embodied in many different forms and should not be construed as being limited to embodiments set forth herein

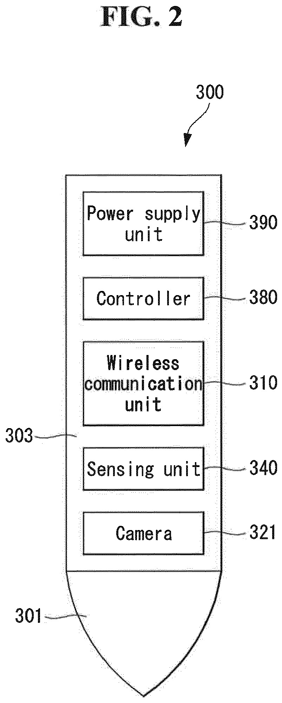

FIG. 2 is a block diagram of a pen type input device 300 according to an embodiment. The pen type input device 300 may include a head 301 contacting a writing surface and a body 303 the user holds. The head 301 may have a gradually decreasing cross-sectional area as it goes to its tip, so that touch accuracy of the pen type input device 300 is improved. Namely, because the pen type input device 300 is pointed at one end, the user may experience a feeling of using a pen.

Electronic components constituting the pen type input device 300 may be mounted on the body 303 of the pen type input device 300.

Referring to FIG. 2, the pen type input device 300 may include a wireless communication unit 310, a camera 321 configured to take a pattern image displayed on the writing surface, a sensing unit 340 configured to sense movement information of the pen type input device 300, and a controller 340 configured to control an entire operation of the pen type input device 300. The pen type input device 300 may further include a power supply unit 390 configured to supply electronic power required to operate the components of the pen type input device 300, an user input unit (not shown) configured to receive an user input, a display unit (not shown) configured to display an operation state of the pen type input device 300, and the like.

The camera 321 may take an image of the writing surface when a writing input is performed using the pen type input device 300. The camera 321 may include at least one of a camera sensor (for example, CCD and CMOS), a photo sensor (or an image sensor), and a laser sensor.

The sensing unit 340 may sense the movement information and pressure information of the pen type input device 300 and sense whether or not the pen type input device 300 touches the touch screen 151 of the mobile terminal 100. The sensing unit 340 may generate a sensing signal for controlling an operation of the pen type input device 300. The sensing unit 340 for sensing the movement may include an acceleration sensor, a magnetic sensor, a gravity sensor, a gyroscope sensor, a motion sensor, and the like. The sensing unit 340 may include a pressure sensor for sensing a pressure against the writing surface, a proximity sensor and a touch sensor for sensing whether or not the pen type input device 300 touches the touch screen 151, and the like. The pen type input device 300 may combinedly use informations sensed by at least two of the above-described sensors.

The wireless communication unit 310 may be used to perform wireless communication between the pen type input device 300 and the mobile terminal 100 or an external server. The wireless communication between the pen type input device 300 and the mobile terminal 100 may be performed through the short range communication. As described above with reference to FIG. 1, the short range communication technique may use Bluetooth®, radio frequency identification (RFID), infrared data association (IrDA), ultra wideband (UWB), ZigBee® may, near field communication (NFC), and the like. Further, when the pen type input device 300 wirelessly communicates with the external server or another external device, wireless Internet, mobile communication network, etc. may be used.

The controller 380 may be configured to control an entire operation of the pen type input device 300. The controller 380 may be configured to extract information from the pattern image included in the writing surface taken with the camera 321. The pattern image displayed on the writing surface may include at least one of coordinate information displaying a touch position of the pen type input device 300, encryption information for encrypting data received from the pen type input device 300, and address information for transmitting the encryption information. The controller 380 may be configured to recognize the coordinate information, the encryption information, the address information, etc. from the pattern image taken with the camera 321 and reflect the recognized informations in the control of the pen type input device 300.

The controller 380 may be configured to generate input information based on the movement information of the pen type input device 300 sensed through the sensing unit 340. The controller 380 may be configured to generate input information including a touch trace based on the movement information of the pen type input device 300. Further, the controller 380 may be configured to generate input information including a gesture, for example, shaking the pen type input device 300 or tapping the pen type input device 300 on the floor, etc.

After the controller 380 generates the input information, the controller 380 may be configured to encrypt the input information based on the encryption information recognized from the pattern image and then transmit the encrypted input information through the wireless communication unit 310.

When the pattern image includes transmission address information, the controller 380 may be configured to transmit the encrypted input information as a transmission address recognized from the pattern image. When the pattern image includes the coordinate information, the controller 380 may be configured to convert the touch trace sensed through the sensing unit 340 into coordinate information and generate input information. When the touch trace is converted into the coordinate information, the controller 380 can accurately recognize the touch position and can improve the recognition of characters, numerals, etc. depending on the touch trace.

The controller 380 may be configured to transmit the information sensed by the sensing unit 340 in a state of raw data, or recognize the information sensed by the sensing unit 340 as the characters and the numerals based on the movement information and transmit the recognition result. Further, the controller 380 may be configured to obtain the writing input of an image format, encrypt the obtained writing image, and transmit the encrypted writing image.

The power supply unit 390 functions to supply electronic power required to operate the components of the pen type input device 300. The power supply unit 390 may include a rechargeable battery.

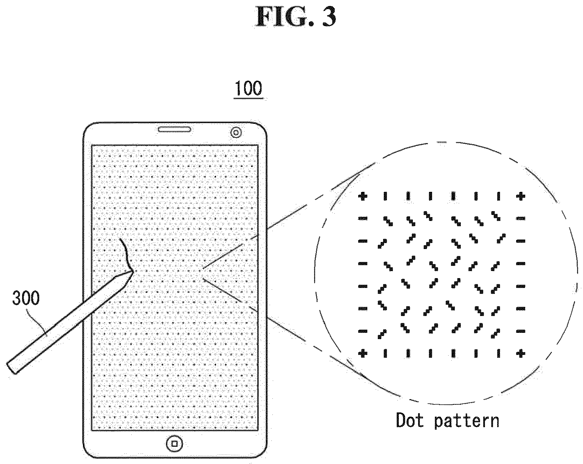

FIG. 3 illustrates a use state of the mobile terminal 100 and the pen type input device 300 according to an embodiment.

The mobile terminal 100 according to the embodiment of the invention may include at least one of the components shown in FIG. 1. The mobile terminal 100 may display the writing surface for an input of the pen type input device 300 on the touch screen 151, receive input information from the pen type input device 300, and process the input information.

The controller 180 of the mobile terminal 100 may be configured to produce the pattern image including information and display a writing screen. The controller 100 may be configured to produce a pattern of dots each having the fine size, that is invisible to the naked eye, and display the dot pattern on the touch screen 151 providing the writing screen. The controller 180 may be configured to produce a pattern of various shapes other than the dot shape. In the following description, the dot pattern is used as an example of the pattern image.

The dot pattern displayed on the writing screen may set so that it displays bit information in accordance with the shape of the dot pattern. For example, the controller 180 may be configured to equally divide a writing area of the touch screen 151 into a plurality of reference areas and assign a 6 X 6 matrix to each reference area. Then, when one element of the 6 X 6 matrix displays 2-bit using the fine dots, each reference area may represent information of 72-bit.

The controller 180 may be configured to display encryption information for encrypting the input information generated in the pen type input device 300, information of X and Y coordinates for recognizing the touch trace of the pen type input device 300, transmission address information to transmit the encryption information, etc. using the dot pattern.

The pen type input device 300 may take the dot pattern displayed on the touch screen 151 with the camera 321 mounted on the head 301 and recognize the dot pattern. Hence, the pen type input device 300 may extract coordinate information displaying the touch position of the pen type input device 300, encryption information for encrypting data received from the pen type input device 300, address information for transmitting the encryption information, and the like.

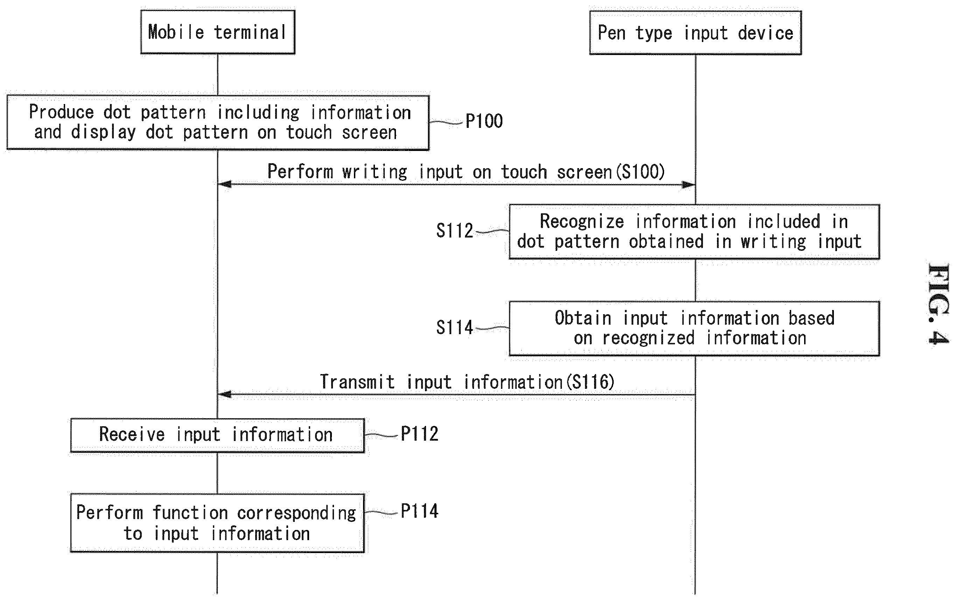

FIGS. 4 to 9 illustrate a method for controlling the mobile terminal 100 and the pen type input device 300 according to a first embodiment of the invention.

FIG. 4 is a flow chart showing the method for controlling the mobile terminal 100 and the pen type input device 300 according to the first embodiment of the invention.

When the mobile terminal 100 displays a writing screen used to receive input information from the pen type input device 300 on the touch screen 151, the mobile terminal 100 may be configured to produce a dot pattern including predetermined information and display the dot pattern on the touch screen 151 in P100. The controller 180 of the mobile terminal 100 may be configured to display encryption information for encrypting the input information generated in the pen type input device 300, information of X and Y coordinates for recognizing a touch trace of the pen type input device 300, transmission address information to transmit the encryption information, etc. using the dot pattern.

A user of the pen type input device 300 may perform a writing input on the touch screen 151, on which a writing screen including the dot pattern is displayed, in S100. When the head 301 of the pen type input device 300 is pressed or a contact between the touch screen 151 and the pen type input device 300 is sensed, the pen type input device 300 may recognize that the writing input is performed.

The pen type input device 300 may take a writing surface with the camera 321 when the writing input is performed, recognize the dot pattern from the taken writing surface, and recognize information included in the dot pattern in S112. The dot pattern may include encryption information for encrypting input information, information of X and Y coordinates for recognizing the touch trace of the pen type input device 300, transmission address information to transmit the encrypted input information, etc.

The pen type input device 300 may process input data based on the recognized information in S114. The pen type input device 300 may generate input information based on the result of sensing a movement and process input information based on information recognized from the dot pattern. For example, the pen type input device 300 may encrypt the input information or convert the input information into coordinate information and may transmit the encrypted input information to the transmission address included in the dot pattern.

The pen type input device 300 may transmit the processed input information to the mobile terminal 100 in S116. The pen type input device 300 may transmit the input information to the mobile terminal 100 through the short range communication method, for example, Bluetooth.

The mobile terminal 100 may receive the input information from the pen type input device 300 in P112 and perform a function corresponding to the received input information in P114. The mobile terminal 100 may display the touch trace of the pen type input device 300 on the touch screen 151 or perform a control function corresponding to the input information.

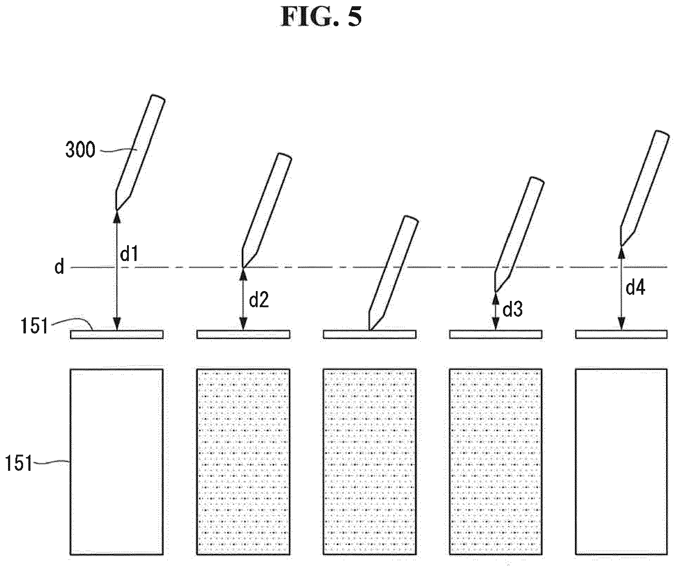

FIGS. 5 to 9 illustrate methods for displaying the writing screen including the dot pattern through the controller 180 of the mobile terminal 100.

The dot pattern has the fine size, that is invisible to the naked eye. However, when the dot pattern is entirely displayed on the touch screen 151, it may seem that brightness of the touch screen 151 is relatively dark. Hence, only when the pen type input device 300 touches or approaches the touch screen 151 and the touch input is performed, the dot pattern may be displayed on the touch screen 151.

Referring to FIG. 5, the controller 180 may be configured to sense a distance between the touch screen 151 and the pen type input device 300 and display the dot pattern when it is determined that the distance between the touch screen 151 and the pen type input device 300 is less than a reference distance d.

The controller 180 may be configured to sense whether or not the pen type input device 300 approaches the touch screen 151 using a proximity sensor 142. When the touch screen 151 is a capacitive touch screen, the proximity sensor 142 may be configured to detect proximity of an object with conductivity through changes in an electric field in accordance with the proximity of the object with conductivity. In this instance, the touch screen 151 may be regarded as the proximity sensor.

When the distance (for example, d1 or d4) between the touch screen 151 and the pen type input device 300 is greater than the reference distance d, the controller 180 may be configured to display only the writing screen. When the distance (for example, d2 or d3) between the touch screen 151 and the pen type input device 300 is equal to or less than the reference distance d or the pen type input device 300 touches the touch screen 151, the controller 180 may be configured to display the dot pattern on the writing screen.

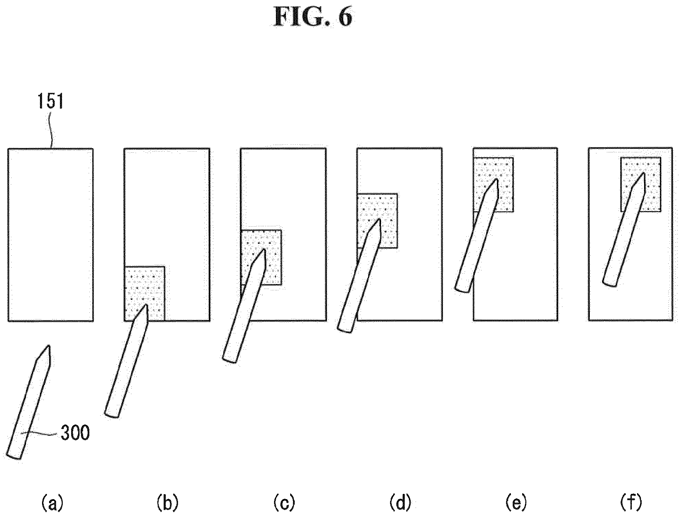

Referring to FIG. 6, the controller 180 may be configured to display the dot pattern only in an area of the touch screen 151 touching the pen type input device 300.

As shown in (a) of FIG. 6, when it is not sensed that the pen type input device 300 approaches or touches the touch screen 151, the controller 180 may be configured to display the writing screen on the touch screen 151.

Referring to (b) to (f) of FIG. 6, the controller 180 may be configured to recognize a proximity or touch location of the touch screen 151 the pen type input device 300 approaches or touches. The controller 180 may be configured to display the dot pattern in an area which is previously set with respect to the proximity or touch location of the touch screen 151. When the proximity or touch location of the touch screen 151 moves, the controller 180 may be configured to move the dot pattern based on the movement of the proximity or touch location of the touch screen 151.

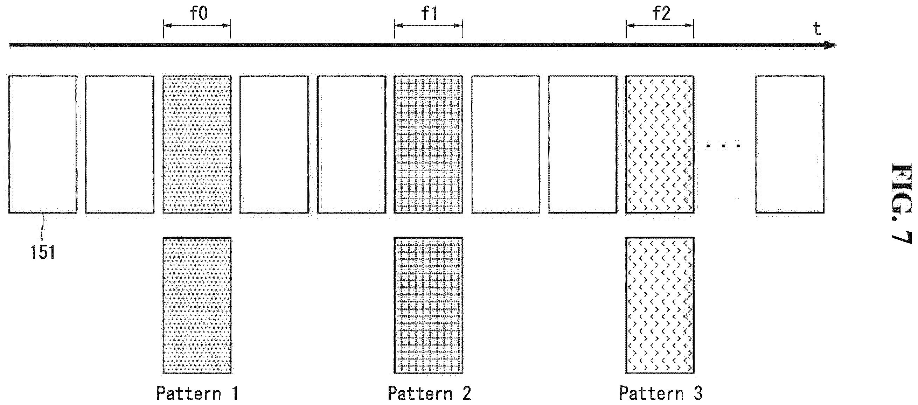

Referring to FIG. 7, the controller 180 may be configured to display the screen on the touch screen 151 through a method for exposing a frame including a pattern image to the screen displayed on the touch screen 151 at predetermined time intervals.

The controller 180 may be configured to display the screen on the touch screen 151 through a method for successively displaying a frame screen.

For example, the controller 180 may be configured to display a screen of about 30 to 60 frames per second and display various screens including a still image, a motion picture, etc. on the touch screen 151. Hence, because time required to expose one frame is as short as 1/30 second, the user cannot perceive an image of each frame with his or her eyes.

Because the controller 180 displays a frame including a pattern image for very short periods of time f0, f1, and f2, which it is difficult for the user to perceive, the controller 180 may provide the pattern image including information for the pen type input device 300 without the perception of the user.

A different pattern image may be displayed on the screen for each of the periods of time f0, f1, and f2. For example, an image of pattern 1 may be displayed on the screen for the period of time f0, an image of pattern 2 may be displayed on the screen for the period of time f1, and an image of pattern 3 may be displayed on the screen for the period of time f2.

When the different pattern image is displayed on the screen for each of the periods of time, the pen type input device 300 may be configured to recognize an input time point based on the pattern image obtained when the touch input is performed, determine whether or not the touch input is successively performed based on changes in the obtained pattern image, and recognize a trace of the touch input.

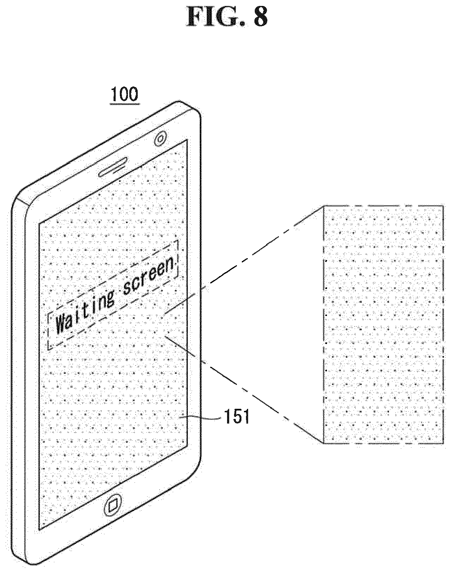

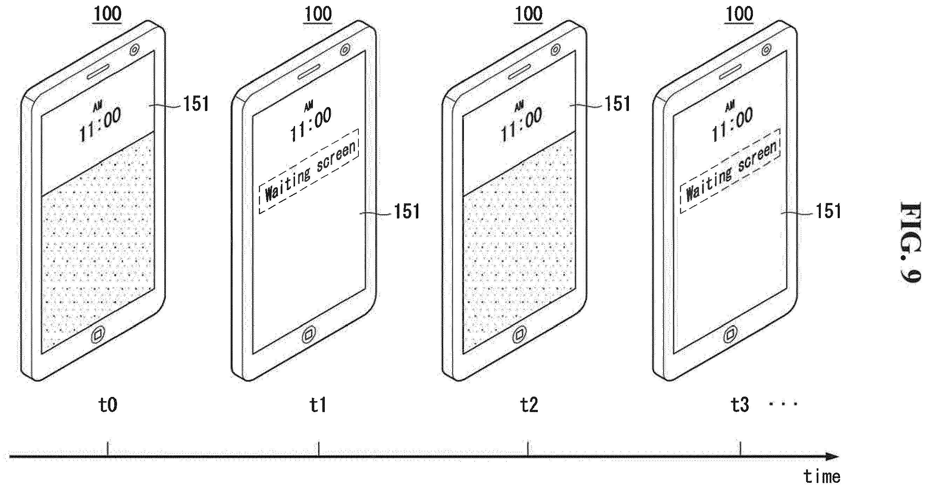

Referring to FIGS. 8 and 9, the controller 180 can improve the recognition of an input operation using the pen type input device 300 by displaying the dot pattern on not the writing input screen but a general screen.

Referring to FIG. 8, the controller 180 may be configured to display the dot pattern on the touch screen 151 even in a state of a lock screen or a waiting screen. Namely, when it is possible to perform the input of the pen type input device 300 on the touch screen 151, the controller 180 may be configured to always display the dot pattern.

Referring to FIG. 9, in a state where the lock screen or the waiting screen is displayed, the controller 180 may be configured to display the dot pattern on the touch screen 151 through a method for exposing a frame including a pattern image at predetermined time intervals (t0, t1, t2, t3...). The controller 180 may display a frame including a pattern image for a very short period of time, which it is difficult for the user to perceive.

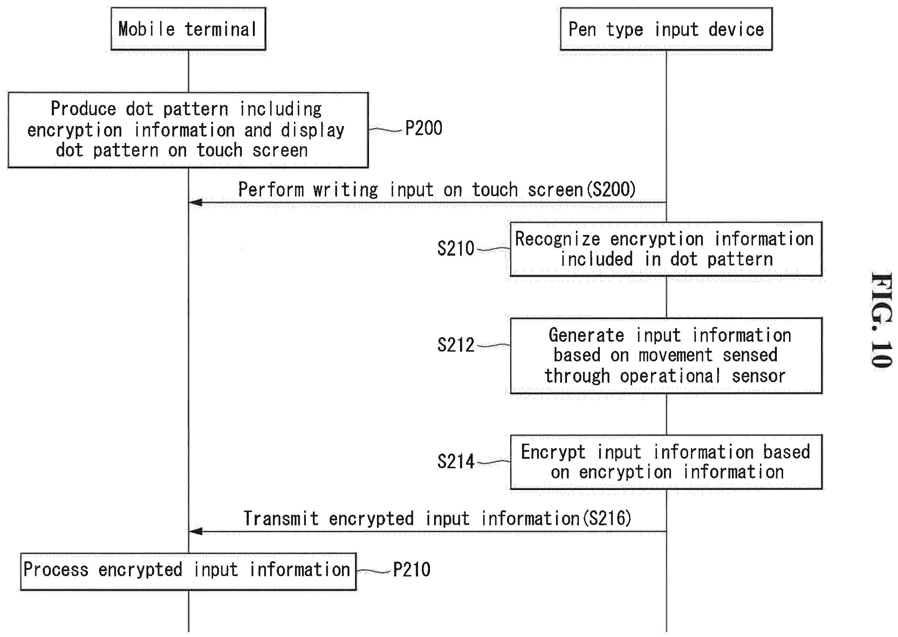

FIGS. 10 to 13 illustrate a method for controlling the mobile terminal 100 and the pen type input device 300 according to a second embodiment of the invention.

FIG. 10 illustrates the method for controlling the mobile terminal 100 and the pen type input device 300 according to the second embodiment of the invention.

When the mobile terminal 100 displays a writing screen used to receive input information from the pen type input device 300 on the touch screen 151, the mobile terminal 100 may produce a dot pattern including encryption information and display the dot pattern on the touch screen 151 in P200. The dot pattern may include encryption information for encrypting the input information generated in the pen type input device 300, information of X and Y coordinates for recognizing a touch trace of the pen type input device 300, transmission address information to transmit the encryption information, and the like. In the embodiment disclosed herein, the encryption information may be previously determined information or may include encryption information provided by the external server. The controller 180 may produce and display the dot pattern including encryption information to be applied.

The user of the pen type input device 300 may perform a writing input on the touch screen 151, on which a writing screen including the dot pattern is displayed, in S200. When the head 301 of the pen type input device 300 is pressed or a contact between the touch screen 151 and the pen type input device 300 is sensed, the pen type input device 300 may recognize that the writing input is performed.

The pen type input device 300 may take a writing surface with the camera 321 when the writing input is performed, recognize the dot pattern from a taken image of the writing surface, and recognize encryption information included in the dot pattern in S210. The dot pattern may include information of X and Y coordinates for recognizing the touch trace of the pen type input device 300, transmission address information to transmit the encrypted input information, etc.

The pen type input device 300 may generate the input information based on a movement sensed through an operational sensor in S212. The input information may include a sensing value of the operational sensor without changing it; or may recognize the sensing value of the operational sensor and convert the sensing value into information represented by characters or trace, etc.; or may include specific information set to the sensing value of the operational sensor.

The pen type input device 300 may encrypt the input information based on the encryption information recognized from the dot pattern in S214 and may transmit the encrypted input information to the mobile terminal 100 in S216. The pen type input device 300 may transmit the input information to the mobile terminal 100 through the short range communication method, for example, Bluetooth.

The mobile terminal 100 may receive and process the input information encrypted by the pen type input device 300 in P210. The mobile terminal 100 may display the touch trace of the pen type input device 300 on the touch screen 151 or perform a control function corresponding to the input information.

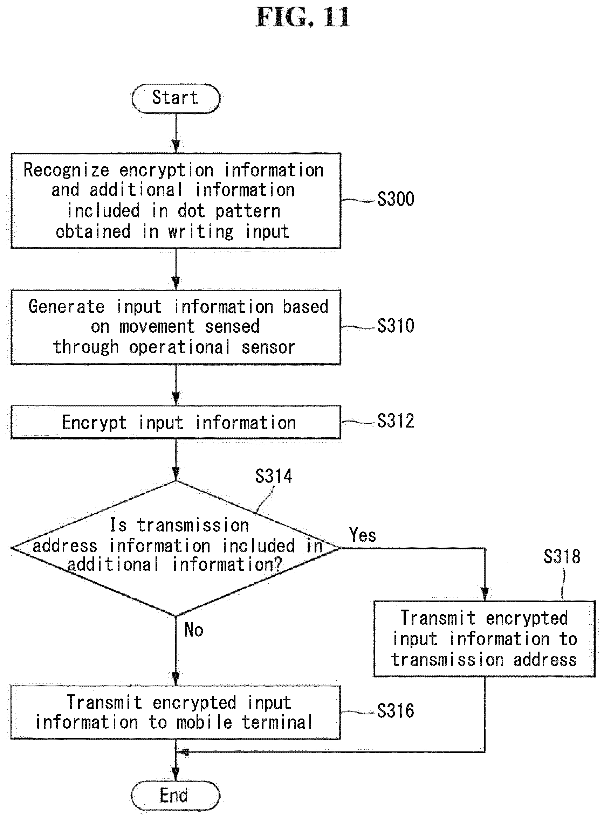

FIG. 11 illustrates a method for controlling the pen type input device 300.

The controller 380 of the pen type input device 300 may be configured to take the writing surface with the camera 321 when the writing input is performed, recognize the dot pattern from the taken image of the writing surface, and recognize encryption information and additional information included in the dot pattern in S300. The additional information may include information of X and Y coordinates of a touch location of the pen type input device 300, transmission address information to transmit the encrypted input information, and the like.

The pen type input device 300 may generate the input information based on a movement sensed through the operational sensor in S310. The input information may include a sensing value of the operational sensor without changing it; or may recognize the sensing value of the operational sensor and convert the sensing value into information represented by characters or trace, etc.; or may include specific information set to the sensing value of the operational sensor.

The controller 380 of the pen type input device 300 may be configured to encrypt the generated input information based on the encryption information recognized from the dot pattern in S312.

The controller 380 may be configured to check that transmission address information to transmit the input information is included in the additional information recognized from the dot pattern, S314. When the transmission address information is not included in the additional information, the controller 380 may be configured to transmit the encrypted input information to the mobile terminal 100 through the short range communication in S316. Hence, a security level of information transmitted to the mobile terminal 100 from the pen type input device 300 can be improved.

On the other hand, when the transmission address information is included in the additional information, the controller 380 may be configured to transmit the encrypted input information to a corresponding transmission address in S318. When the input information is transmitted to a specific transmission address, the controller 380 may be configured to transmit the input information through a mobile communication network or Internet network. Hence, the pen type input device 300 may encrypt input information requested from a server (for example, a bank server and a payment server) requiring security and transmit the encrypted input information.

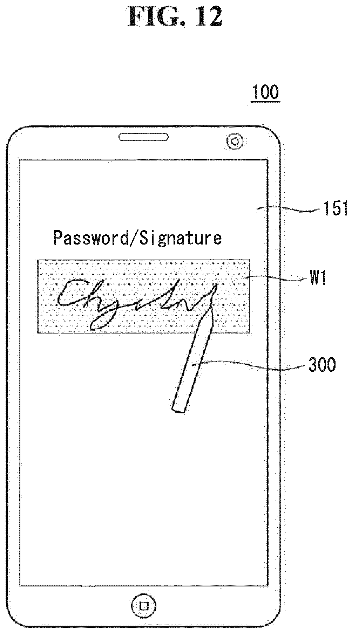

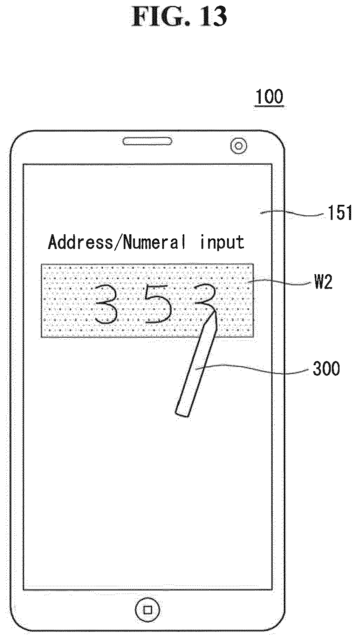

FIGS. 12 and 13 illustrate an implementation for transmitting input information encrypted by the pen type input device 300 to the outside.

Referring to FIG. 12, the mobile terminal 100 may display a writing screen W1 for the pen type input device 300 in a portion of the touch screen 151.

The controller 180 of the mobile terminal 100 may be configured to produce a dot pattern including information to be provided for the pen type input device 300 and provide the dot pattern for the writing screen W1. The dot pattern may include dots having the fine size that is invisible to the naked eye and may have various shapes other than the dot shape.

When the writing screen W1 displayed on the touch screen 151 is a writing screen for inputting a password or a signature identifying the user, the controller 180 of the mobile terminal 100 may be configured to produce the dot pattern including information of X and Y coordinates, encryption information for encrypting the input password or signature, transmission address information to transmit the encryption information, etc. and display the dot pattern.

In a writing input, the pen type input device 300 may recognize the information of X and Y coordinates, the encryption information for encrypting the input password or signature, the transmission address information to transmit the encryption information, etc. included in the dot pattern displayed on the writing screen W1. In the embodiment disclosed herein, the encryption information and the transmission address information may be provided in the form of a one-time password (OPT) that is processable in a specific transmission address.

Further, the pen type input device 300 may recognize a trace of the pen type input device 300 displayed on the writing screen W1 in the form of an image.

Further, the pen type input device 300 may encrypt the recognized image (i.e., the password or the signature) based on the encryption information and transmit the encrypted information to the transmission address recognized in the dot pattern.

Referring to FIG. 13, the mobile terminal 100 may display a writing screen W2 for receiving an address, a telephone number, numerals, etc. from the pen type input device 300 in a portion of the touch screen 151.

The controller 180 of the mobile terminal 100 may be configured to produce a dot pattern (including information of X and Y coordinates, encryption information, transmission address information, etc.) to be provided for the pen type input device 300 and provide the dot pattern for the writing screen W2.

In a writing input, the pen type input device 300 may recognize the information of X and Y coordinates, the encryption information for encrypting a password or a signature, the transmission address information to transmit the encryption information, etc. included in the dot pattern displayed on the writing screen W2.

The pen type input device 300 may be configured to recognize numerals or characters based on a trace of the pen type input device 300 displayed on the writing screen W2. In the embodiment disclosed herein, the pen type input device 300 may be configured to compare the recognized numerals or characters with a previously stored input format and correct them.

The pen type input device 300 may encrypt the corrected input information and then transmit the encrypted input information to a transmission address recognized in the dot pattern.

When a separate transmission address is not set, the pen type input device 300 may transmit the encrypted input information to the mobile terminal 100 through the short range communication.

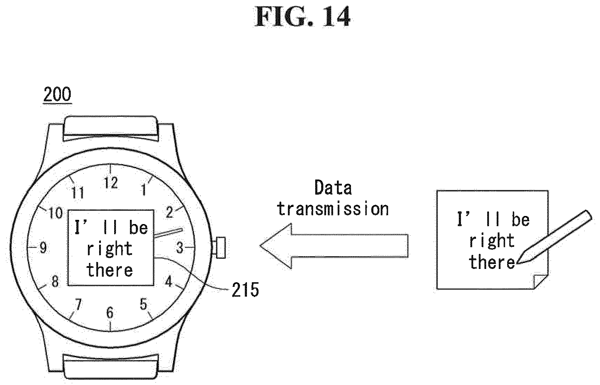

FIGS. 14 to 22 illustrate a method for controlling the mobile terminal and the pen type input device according to a third embodiment of the invention. More specifically, FIGS. 14 to 22 illustrate a method for controlling a watch type mobile terminal 200 and a pen type input device 300. The watch type mobile terminal 200 may be configured to include at least one of the components of the mobile terminal shown in FIG. 1.

Referring to FIG. 14, the watch type mobile terminal 200 according to the embodiment of the invention may be connected to the pen type input device 300, that generates input information based on movement information, through the short range communication method and process information received from the pen type input device 300.

The watch type mobile terminal 200 may include a short range communication unit, a display unit 215, and a controller 180 configured to connect short range communicate with the pen type input device 300 through the short range communication unit when a previously set input is received during a display of a received message on the display unit 215, display a message input screen on the display unit 215, and change a display state of the message input screen based on input information received from the pen type input device 300.

The pen type input device 300 may include a wireless communication unit 310 for communication with the watch type mobile terminal 200, a sensing unit 340 configured to sense a movement, and a controller 380 configured to generate input information based on the movement sensed through the sensing unit 340 and transmit the input information to the watch type mobile terminal 200.

According to the above-described configuration, when a writing input is performed on a predetermined writing surface using the pen type input device 300, the pen type input device 300 may generate input information based on the movement and then transmit the input information to the watch type mobile terminal 200.

The watch type mobile terminal 200 may display a trace of the pen type input device 300 on the message input screen based on the input information received from the pen type input device 300, or display a text message recognized from the input information. The watch type mobile terminal 200 may close the message input screen based on the input information received from the pen type input device 300, or delete a portion or the entire of a text message that is being written. The watch type mobile terminal 200 may transmit the input text image.

Hence, the watch type mobile terminal 200 having a limited message input space may easily perform an input of the text message.

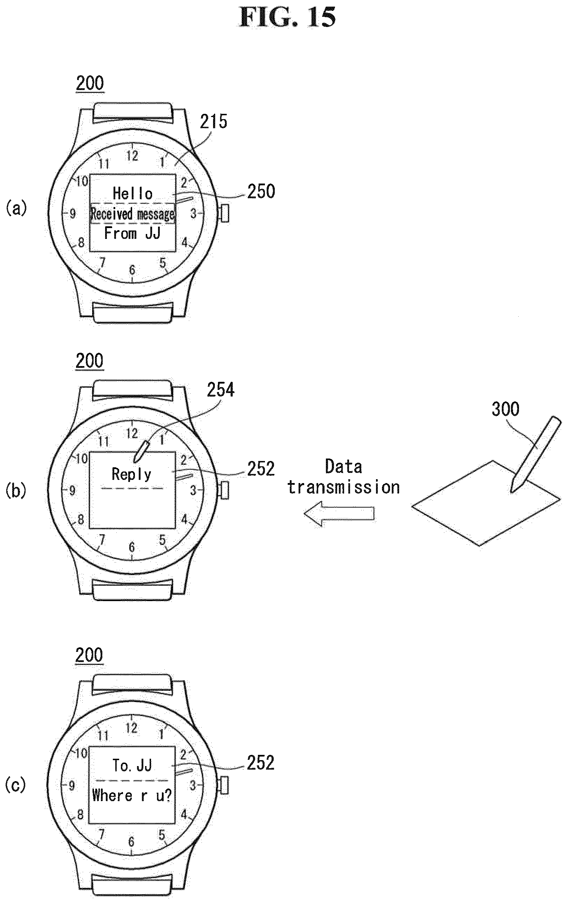

FIGS. 15 to 22 illustrate a method for controlling the watch type mobile terminal 200 and the pen type input device 300.

FIG. 15 illustrates an example of a method for writing a message using the watch type mobile terminal 200 and the pen type input device 300.

Referring to (a) of FIG. 15, when the watch type mobile terminal 200 receives a text message, the watch type mobile terminal 200 may display contents of the received text message on the display unit 215.

Referring to (b) of FIG. 15, when the user checking the received text message performs a previously set input, the watch type mobile terminal 200 may connect the short range communication with the pen type input device 300 and then display a message input screen 252 on the display unit 215. In the embodiment disclosed herein, the previously set input may include an input of touching the watch type mobile terminal 200, an input of touching the display unit 215, and the like. The controller 180 of the watch type mobile terminal 200 may be configured to display an icon 254 of the pen type input device 300 on one side of the message input screen 252 and display that an input using the pen type input device 300 is possible.

When the user performs a writing input on a predetermined writing surface using the pen type input device 300, the pen type input device 300 may generate input information based on a movement and then transmit the input information to the watch type mobile terminal 200.

Referring to (c) of FIG. 15, the watch type mobile terminal 200 may display a message input by the user on the message input screen 252 based on the input information received from the pen type input device 300.

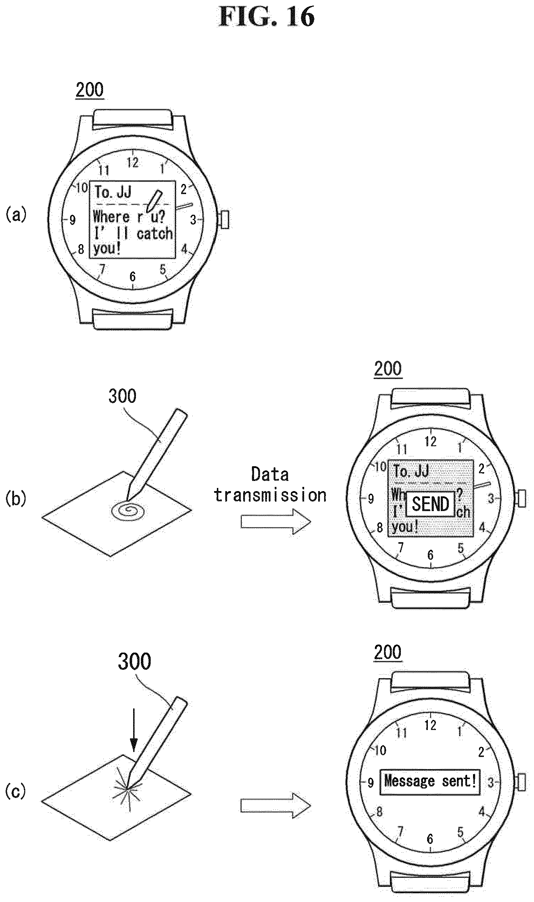

FIG. 16 illustrates an example of a method for sensing a reply message using the watch type mobile terminal 200 and the pen type input device 300.

Referring to (a) of FIG. 16, the watch type mobile terminal 200 may display a message the user inputs on the display unit 215.

Referring to (b) of FIG. 16, when the user performs a writing input on a predetermined writing surface using the pen type input device 300, the pen type input device 300 may generate input information based on a movement and then transmit the input information to the watch type mobile terminal 200. For example, the user may draw a previously set pattern using the pen type input device 300.

The watch type mobile terminal 200 may display a "send" button, that indicates sending a message written based on the input information received from the pen type input device 300, on the display unit 215.

Referring to (c) of FIG. 16, when the user performs an input (for example, a gesture of touching the writing surface once) of selecting the "send" button using the pen type input device 300, the pen type input device 300 may generate input information based on a sensed movement and then transmit the input information to the watch type mobile terminal 200.

The watch type mobile terminal 200 may send a message written on the message input screen based on the input information received from the pen type input device 300 and then display a notification "Message sent!" informing that the message has been sent successfully on the display unit 215.

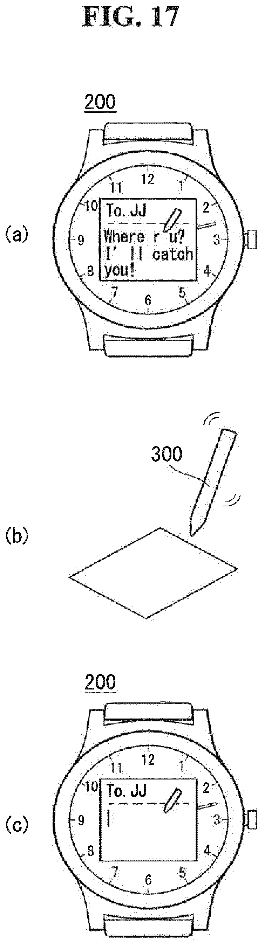

Referring to (a) of FIG. 17, the watch type mobile terminal 200 may display a message the user inputs on the display unit 215.

Referring to (b) of FIG. 17, when the user performs an input (for example, a gesture of shaking the pen type input device 300) of deleting the message written using the pen type input device 300, the pen type input device 300 may generate input information based on a sensed movement and then transmit the input information to the watch type mobile terminal 200.

Referring to (c) of FIG. 17, the watch type mobile terminal 200 may delete the message written on the message input screen based on the input information received from the pen type input device 300.

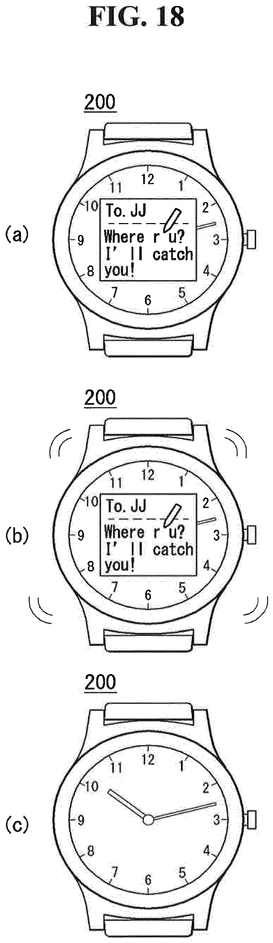

Referring to (a) of FIG. 18, the watch type mobile terminal 200 may display a message, the user inputs using the pen type input device 300, on the display unit 215.

Referring to (b) of FIG. 18, when the user performs an input (for example, a gesture of shaking the watch type mobile terminal 200) of ending an input of the written message, the watch type mobile terminal 200 may recognize a user input instructing an end of writing the message based on a sensed movement.

Referring to (c) of FIG. 18, the watch type mobile terminal 200 may end writing the message in response to the user input and release the connection of the short range communication with the pen type input device 300.

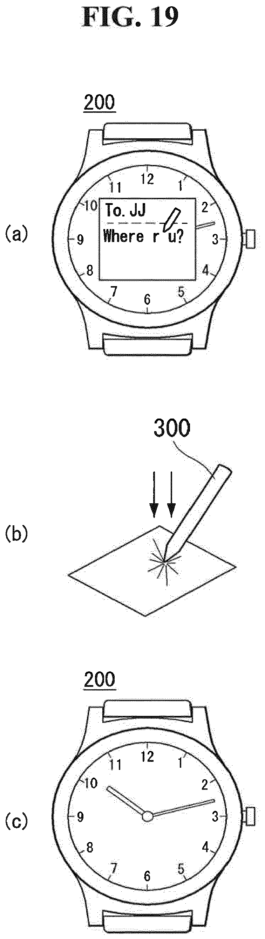

FIG. 19 illustrates an example of a process for ending writing a message, unlike FIG. 18.

Referring to (a) of FIG. 19, the watch type mobile terminal 200 may display a message, the user inputs using the pen type input device 300, on the display unit 215.

Referring to (b) of FIG. 19, when the user performs an input (for example, a gesture of touching the writing surface two or more times using the pen type input device 300) of ending the message input using the pen type input device 300, the pen type input device 300 may generate input information based on a sensed movement and then transmit the input information to the watch type mobile terminal 200.

Referring to (c) of FIG. 19, the watch type mobile terminal 200 may ends writing the message based on the input information received from the pen type input device 300 and release the connection of the short range communication with the pen type input device 300.

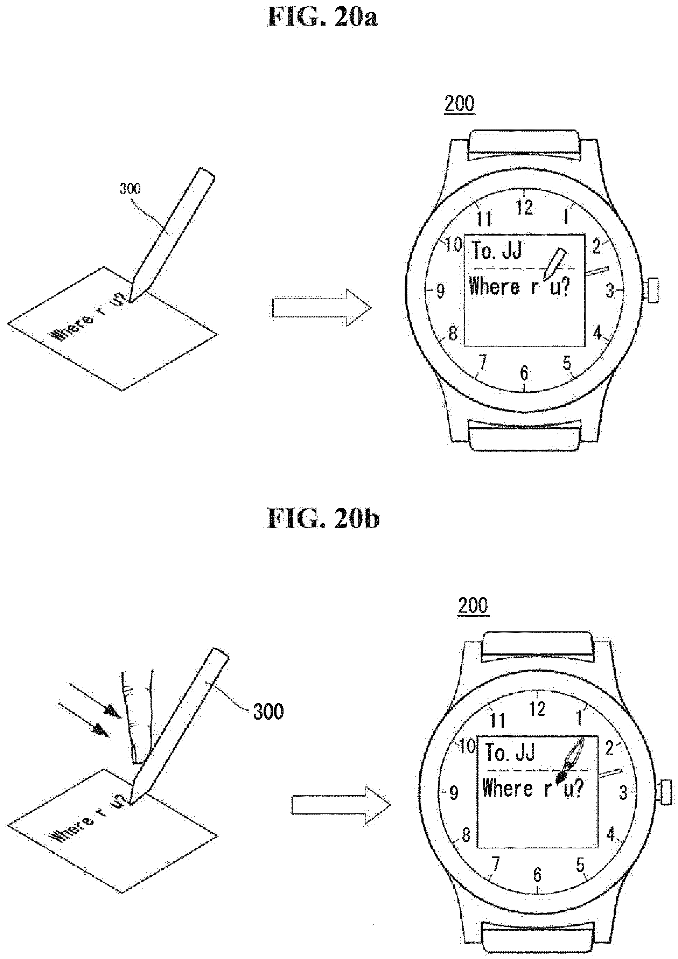

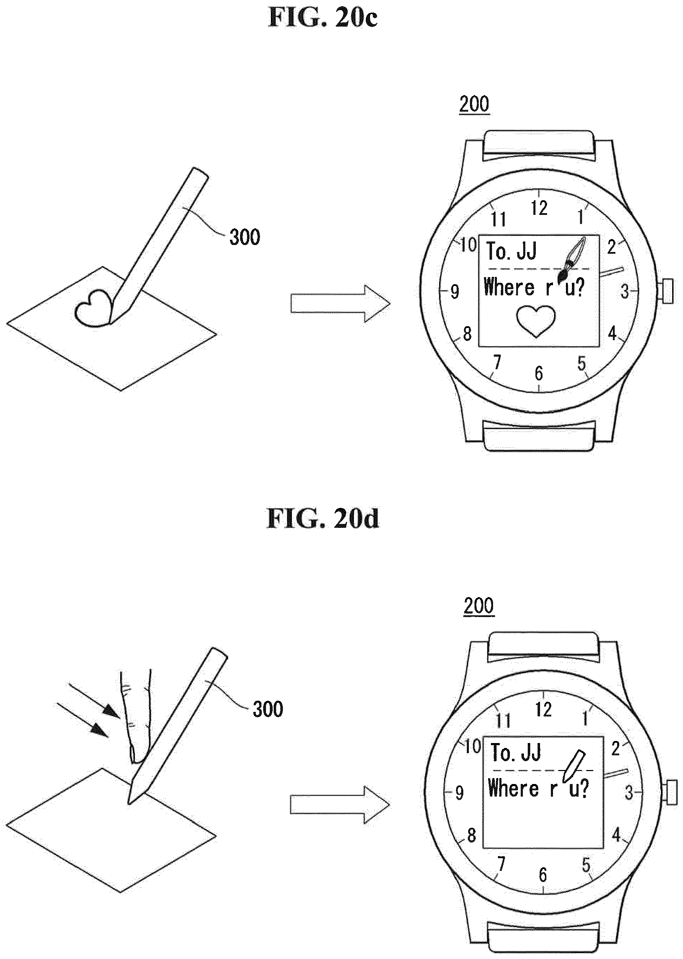

FIG. 20 illustrates an example of a method for writing a message using the watch type mobile terminal 200 and the pen type input device 300.

Referring to FIG. 20a, the watch type mobile terminal 200 may display the message input screen 252 on the display unit 215, display the icon 254 of the pen type input device 300 on one side of the message input screen 252, and display that an input using the pen type input device 300 is possible.

The pen type input device 300 may generate input information based on a movement resulting from a writing input of the user and then transmit the input information to the watch type mobile terminal 200.

The watch type mobile terminal 200 may display a message input by the user on the message input screen 252 based on the input information received from the pen type input device 300.

Referring to FIG. 20b, when the user performs an input (for example, a gesture of touching the pen type input device 300 two or more times) of converting a text message input mode into a drawing mode using the pen type input device 300, the pen type input device 300 may generate input information based on a movement and then transmit the input information to the watch type mobile terminal 200.

The watch type mobile terminal 200 may convert the text message input mode into the drawing mode based on the input information received from the pen type input device 300. The controller 180 of the watch type mobile terminal 200 may be configured to change the icon 254 of the pen type input device 300 displayed on the message input screen 252 to a brush shape and display that the text message input mode has been converted into the drawing mode.

Referring to FIG. 20c, the pen type input device 300 may generate input information based on a movement resulting from a writing input of the user and then transmit the input information to the watch type mobile terminal 200.

The watch type mobile terminal 200 may display a trace of the pen type input device 300 on the message input screen based on the input information received from the pen type input device 300.

Referring to FIG. 20d, when the user performs an input (for example, a gesture of touching the pen type input device 300 two or more times) of converting the drawing mode into the text message input mode using the pen type input device 300, the pen type input device 300 may generate input information based on a movement and then transmit the input information to the watch type mobile terminal 200.

The watch type mobile terminal 200 may convert the drawing mode into the text message input mode based on the input information received from the pen type input device 300. The controller 180 of the watch type mobile terminal 200 may be configured to change the icon 254 of the pen type input device 300 displayed on the message input screen 252 from the brush shape to a pen shape and display that the drawing mode has been converted into the text message input mode.

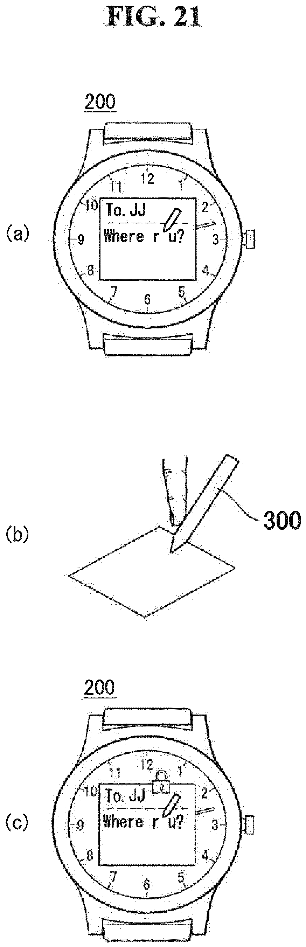

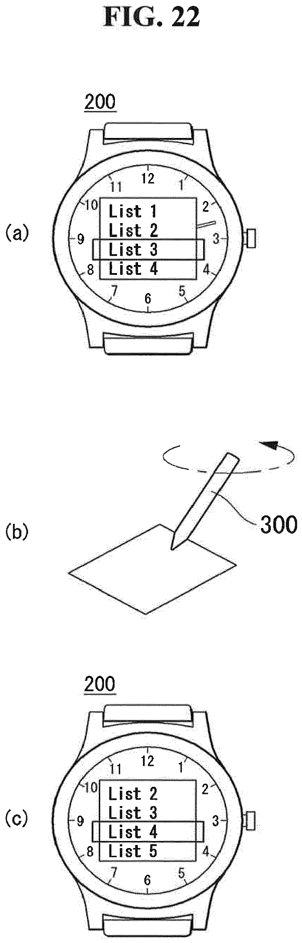

FIGS. 21 and 22 illustrate an example of a method for controlling the watch type mobile terminal 200 using the pen type input device 300.

Referring to (a) of FIG. 21, the watch type mobile terminal 200 may display the message input screen on the display unit 215, display the icon of the pen type input device 300 on one side of the message input screen, and display that an input using the pen type input device 300 is possible.

Referring to (b) of FIG. 21, when the user performs an input (for example, an input of scanning the user's fingerprint on the pen type input device 300) of setting security of a text message using the pen type input device 300, the pen type input device 300 may transmit user fingerprint information to the watch type mobile terminal 200.

Referring to (c) of FIG. 21, the watch type mobile terminal 200 may perform authentication of the user fingerprint information received from the pen type input device 300 based on previously stored user fingerprint information. If the user authentication succeeds, the controller 180 of the watch type mobile terminal 200 may be configured to display a security setting icon on the message input screen and display that the security setting has been performed on the input message. If the user wants to check the security setting message, the controller 180 may be configured to request authentication information from the user and display the security setting message only when the user authentication succeeds.

Referring to (a) of FIG. 22, the watch type mobile terminal 200 may display a list of predetermined information on the display unit 215.

Referring to (b) of FIG. 22, when the user performs an input (for example, a gesture of rotating the pen type input device 300) of selecting a specific item of the list using the pen type input device 300, the pen type input device 300 may generate input information based on a movement and then transmit the input information to the watch type mobile terminal 200.

Referring to (c) of FIG. 22, the watch type mobile terminal 200 may display the item the user selects from the list displayed on the display unit 215 based on the input information received from the pen type input device 300.

The above-described method of controlling the mobile terminal may be written as computer programs and may be implemented in digital microprocessors that execute the programs using a computer readable recording medium. The method of controlling the mobile terminal may be executed through software. The software may include code segments that perform required tasks. Programs or code segments may also be stored in a processor readable medium or may be transmitted according to a computer data signal combined with a carrier through a transmission medium or communication network.

The computer readable recording medium may be any data storage device that can store data that can be thereafter read by a computer system. Examples of the computer readable recording medium may include read-only memory (ROM), random-access memory (RAM), CD-ROMs, DVD±ROM, DVD-RAM, magnetic tapes, floppy disks, optical data storage devices. The computer readable recording medium may also be distributed over network coupled computer systems so that the computer readable code is stored and executed in a distribution fashion.

A mobile terminal may include a first touch screen configured to display a first object, a second touch screen configured to display a second object, and a controller configured to receive a first touch input applied to the first object and to link the first object to a function corresponding to the second object when receiving a second touch input applied to the second object while the first touch input is maintained.

A method may be provided of controlling a mobile terminal that includes displaying a first object on the first touch screen, displaying a second object on the second touch screen, receiving a first touch input applied to the first object, and linking the first object to a function corresponding to the second object when a second touch input applied to the second object is received while the first touch input is maintained.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A pen type input device comprising:
a wireless communication unit;
an image recognition unit configured to obtain a pattern image displayed on a writing surface and recognize encryption information included in the pattern image;
an operational sensor configured to sense a movement; and
a controller configured to generate input information based on the movement sensed by the operational sensor, encrypt the input information in accordance with the encryption information, and transmit the encrypted input information to an external device through the wireless communication unit.

2. The pen type input device of claim 1, wherein the controller is further configured to transmit the encrypted input information to a mobile terminal, that is connected to the pen type input device through the wireless communication unit, through a short range wireless communication method.

3. The pen type input device of claim 1, wherein when transmission address information is included in the pattern image as a result of a recognition of the image recognition unit, the controller is further configured to transmit the encrypted input information to the transmission address information.

4. The pen type input device of claim 1, wherein when coordinate information is included in the pattern image as a result of a recognition of the image recognition unit, the controller is further configured to generate input information displaying the movement sensed by the operational sensor as the coordinate information.

5. The pen type input device of claim 1, wherein the controller is further configured to recognize characters and numerals based on the movement sensed by the operational sensor and generate the input information.

6. The pen type input device of claim 5, wherein the controller is further configured to compare the recognized characters and numerals with previously stored information, correct the recognized characters and numerals, and generate the input information.

7. The pen type input device of claim 1, wherein the controller is further configured to take the writing surface to obtain a writing image and generate input information including the obtained writing image.

8. The pen type input device of claim 1, wherein the controller is further configured to determine control information of a mobile terminal, that is set to the movement sensed by the operational sensor, based on the movement and generate the input information.

9. A mobile terminal comprising:
a touch screen; and
a controller configured to produce a pattern image including encryption information for encrypting input information generated in a pen type input device when a writing screen for the pen type input device is displayed on the touch screen, and display the pattern image on the writing screen.

10. The mobile terminal of claim 9, wherein the pattern image further includes at least one of coordinate information of each position of the writing screen and transmission address information to transmit the input information.

11. The mobile terminal of claim 9, wherein when a distance between the pen type input device and the touch screen is less than a reference distance, the controller is further configured to display the pattern image on the writing screen.

12. The mobile terminal of claim 9, wherein when a distance between the pen type input device and the touch screen is less than a reference distance, the controller is further configured to display the pattern image within a previously set distance range with respect to a location close to the pen type input device.

13. The mobile terminal of claim 9, wherein the controller is further configured to display a frame including the pattern image on the touch screen at predetermined time intervals.

14. The mobile terminal of claim 9, wherein the controller is further configured to display a trace of the pen type input device on the writing screen based on encrypted input information received from the pen type input device.

15. The mobile terminal of claim 9, wherein the controller is further configured to transmit encrypted input information received from the pen type input device to a previously set transmission address.

16. A watch type mobile terminal comprising:
a short range communication unit;
a display unit; and
a controller configured to connect short range communicate with a pen type input device through the short range communication unit when a previously set input is received during a display of a received message on the display unit, display a message input screen on the display unit, and change a display state of the message input screen based on input information received from the pen type input device.

17. The watch type mobile terminal of claim 16, wherein the controller is further configured to display an input trace of the pen type input device on the message input screen based on the input information received from the pen type input device.

18. The watch type mobile terminal of claim 17, wherein the controller is further configured to recognize characters input based on the input trace of the pen type input device and display a result of a recognition of the characters on the message input screen.

19. The watch type mobile terminal of claim 16, wherein the controller is further configured to delete information or a message input to the message input screen based on the input information received from the pen type input device, or close the message input screen.

20. The watch type mobile terminal of claim 16, wherein the controller is further configured to transmit a message input to the message input screen based on the input information received from the pen type input device to a previously set transmission address.
